# EUROPÄISCHE PATENTANMELDUNG

(11) **EP 2 210 737 A1**
(43) Veröffentlichungstag der Anmeldung: **28.07.2010**
(21) Anmeldenummer: 09015449.3
(22) Anmeldetag: 14.12.2009
(51) Int. Cl.: B32B 27/32, B65D 65/40, C08L 23/08, C08L 23/10

(54) **Peelbare Folie für faserige Substrate**

(30) Priorität: 23.12.2008 DE 102008063024; 28.01.2009 DE 102009006470
(71) Anmelder: Alkor Folien GmbH, 83101 Rohrdorf-Thansau (DE)
(72) Erfinder: Schumacher, Rainer, 83358 Seebruck (DE)
(74) Vertreter: Wagner, Jutta

(57) **Zusammenfassung**

Die vorliegende Erfindung betrifft eine Polypropylenfolie mit einer Peelschicht die dazu geeignet ist, einen wieder lösbaren Haftverbund mit beschichteten oder unbeschichteten faserigen Substraten einzugehen. Die Peelschicht umfasst eine Kombination von Polypropylen, bevorzugt zwischen 20% und 70% und einem polyolefinischen Plastomer mit einer Dichte von 0,85 bis 0,89 g/cm³, bevorzugt zwischen 30 und 80%, die ohne weitere Additive wie Haftungsverbesserer, anorganische Füllstoffe, oder polare Polymere diese Anforderung erfüllt.

## Beschreibung

Die vorliegende Erfindung betrifft eine Folie mit der man durch einen Schweißvorgang zusammen mit einem beschichteten oder unbeschichteten Papier, oder einem beschichteten oder unbeschichteten synthetischen Papier eine peelfähige und sterilisierbare Verbindung herstellen kann und einen peelfähigen Verbund aus dieser Folie mit einem beschichteten oder unbeschichteten Papier, oder einem beschichteten oder unbeschichteten synthetischen Papier sowie dessen Verwendung zur Herstellung von sterilisierbaren Verpackungen.

Für die Verpackung von medizinischen Artikeln wie zum Beispiel Tupfer, Spritzen Tücher, Operationsbestecken werden Verbunde eingesetzt, siehe z.B. DE 19 27 746 A1, DE 8706916 U1. Die Verbunde bestehen in der Regel aus einem Substrat, häufig in Form einer Unterfolie, und einer Oberfolie. Der Verbund zwischen der Oberfolie und der Unterfolie muss gut genug sein, dass dieser sich während des Transportes nicht trennt und damit das verpackte und sterilisierte Material schützt, aber bei Gebrauch mit einer bestimmten Kraft mittels "aufpeelen" zu öffnen ist. Eine besondere Forderung hierbei ist, dass die Kraft zur Trennung nicht so hoch sein darf, dass es zu Ausrissen von Fasern kommt.

Das zu verschweißende Substrat besteht in der Regel aus einem Papier, einem synthetischen Papier, wie z.B. Tyvek® (DuPont) oder Ovantex® (Oliver) oder aus einem synthetischen Papier, das mit einer Beschichtung versehen worden ist. Diese Substrate stellen sicher, dass während der Sterilisation, wie z.B. mit Ethylenoxid, das Gas in das Innere der Verpackung gelangen kann und dort die Keime getötet werden.

Substrate die beschichtet sind, haben in der Regel die Beschichtung so aufgebracht, dass durch kleine Fehlstellen Gase trotzdem durch dieses Material durchdringen können. In der Anmeldung DE 19 27 746 A1 werden Papiere beschrieben, die in einem Gittermuster beschichtet sind, so dass Gase durch das Papier durchdringen können, aber trotzdem ein sicherer Verschluss des Behältnisses gewährleistet werden kann. Als Beschichtungsmaterialien werden LLDPE (Linear Low Density Polyethylen), funktionalisierte Copolymere wie zum Beispiel EVA (Ethylen Vinyl Acetat) oder EEA (Ethylen Ethylacrylat) oder EBA (Ethylen Butylacrylat) eingesetzt. Der Nachteil ist in diesem Fall, dass Unebenheiten im Substrat sich auf die Beschichtung übertragen.

Bei Substraten, die nicht beschichtet sind, werden Oberfolien verwendet, die über eine Peelschicht verfügen. Die Peelschicht gewährleistet dabei die Verbindung mit dem Substrat und die Trennbarkeit von Hand beim Öffnen.

In der Literatur werden unterschiedlichste Systeme beschrieben. Es sind z.B. Folien aus beschichtetem Polyester oder Polyamid bekannt. Überwiegend wird hier eine Polyethylenschicht mittels Extrusionsbeschichtung aufgebracht.

In WO 86/03976 A1 wird ein Verpackungssystem beschrieben, das aus einer gasdurchlässigen Seite und einer peelfähigen Folie besteht. Diese peelfähige Folie ist aus einem Polyester, Nylon oder Polycarbonat und einer EVA-Schicht aufgebaut.

In US 4,810,541 A wird ein Verpackungscontainer beschrieben, der eine Peelschicht aus einer Mischung von Polyethylen, EVA und Polybutylen enthält.

In US 3,891,089 A wird beschrieben, dass Substrate mit speziell ausgesuchten EVA-Polymer-Schichten unter definierten Bedingungen gegen Papier verschweißen und somit für peelfähige Verpackungen geeignet sind.

In WO 03/091020 A1 wird eine Peelfolie beschrieben, die aus mindestens 2 Schichten besteht. Die Hauptschicht besteht aus Polyethylen mit einer Dichte von 0,88 bis 0,93 g/cm³ und die Peelschicht aus einer Mischung von Polyethylen und einem mineralischen Füllstoff als Peelkraftregler sowie ggfs. einem Polyolefin Plastomer. Diese Peelschicht haftet gegen synthetische Papiere wie z.B. Tyvek®. Der Füllstoff lässt jedoch keine transparenten Verpackungen zu.

In US 5,830,547 A wird eine Peelschicht beschrieben, die aus EVA und EAA-Polymeren besteht, wobei die hohen Peelkräfte dieser Mischung, die zu einem Faserausriss führen würden, durch Zumischung von Polybuten und Talkum kontrolliert werden.

Aufgabe der vorliegenden Erfindung war es, eine Folie bereitzustellen, die sich als Oberfolie für solche Verpackungen eignet und dabei transparent ist sowie aus reinem Polyolefinmaterial bestehen kann.

Überraschend wurde gefunden, dass eine Folie, die zumindest zwei Schichten umfasst, nämlich eine Peelschicht aus einer Mischung von Polypropylen und einem Polyolefin-Plastomer, die mit einem Substrat aus beschichtetem oder unbeschichtetem Papier oder synthetischem Papier verschweißbar ist, so dass eine Siegelnaht mit einer Peelkraft von 0,8 bis 2,8 N/cm erhalten wird, und eine Hauptschicht aus Polypropylen, die eine Wärmebeständigkeit bis mindestens 130 °C aufweist, die obige Aufgabe löst.

Die vorliegende Erfindung betrifft daher eine Folie aus mindestens 2 Schichten, bevorzugt 3 Schichten, die vorzugsweise mittels einer Coextrusion in einem Schritt mit folgendem Aufbau hergestellt worden ist:
2-Schichtfolie: Hauptschicht, Peelschicht
3-Schichtfolie: Deckschicht, Kern- bzw. Hauptschicht, Peelschicht.

Der Begriff "Folie" bezeichnet im Rahmen der vorliegenden Erfindung flächige Gebilde, deren Breite und Länge die Dicke um ein vielfaches übersteigt. Die Dicke beträgt in der Regel unter einem Millimeter bis hin zu wenigen Mikrometern.

Sofern nichts Spezielles angegeben ist, kann eine Folie einschichtig oder mehrschichtig, z.B. zwei-, drei- oder vierschichtig sein. Die einzelnen Schichten oder Lagen können durch Kalandrieren, Extrusion, Koextrusion, Extrusionsbeschichtung hergestellt und/oder durch verschiedene Laminierverfahren, wie Kleben, Thermobonding und Ähnliches, verbunden sein. Die Verbindung erfolgt beim Laminieren über die ganze oder im wesentlichen ganze Fläche.

Die erfindungsgemäße Folie umfasst eine Peelschicht, die dazu geeignet ist, einen wieder lösbaren Haftverbund mit beschichteten oder unbeschichteten faserigen Substraten einzugehen. Die Besonderheit der Peelschicht ist eine Kombination von Polypropylen, bevorzugt zwischen 20 und 70 %, und einem polyolefinischen Plastomer mit einer Dichte von 0,85 bis 0,89 g/cm³, bevorzugt zwischen 30 und 80 %, die ohne einen Zusatz weiterer Additive wie Haftungsverbesserer, anorganische Füllstoffe oder polare Polymere die gestellten Anforderungen erfüllt.

Die Hauptschicht besteht aus einer flexiblen, durchstoßfesten, aber thermisch verformbaren Mischung von Polypropylen und ggfs. anderen Poylolefinen und/oder Additiven und Hilfsstoffen. Je nach Anforderung an die Verformbarkeit können Polypropylen Copolymerisate, Random-Block-Copolymerisate oder auch SEBS (Styrol-Ethylen-Butylen-Styrolpolymere), SBS (Styrol-Butadien-Styrolpolymere, Styrol-Isopren-Styrolpoylmere (SIS), Styrol-Ethylen-Butylen-Styrolpolymere(SEBS), Styrol-Ethylen-Propylen-Styrolpolymere (SEPS) oder vergleichbare Komponenten ausgewählt und zugemischt werden.

Für die Hauptschicht werden vorzugsweise Mischungen von Polypropylenen basierend auf Random-Copolymeren, heterophasischen Random-Copolymeren und Homopolymeren eingesetzt, um so je nach Anforderung optimierte Grundeigenschaften, wie zum Beispiel Tiefziehfähigkeit und Durchstoßfestigkeit sicherzustellen. Es ist möglich, ein einziges Polyproyplen (Homo- oder Copolymer) einzusetzen.

Der Begriff "basierend auf" bedeutet im Rahmen der vorliegenden Erfindung in Bezug auf die Zusammensetzung von Folien bzw. Folienschichten, dass die genannte Folie bzw. Folienschicht im wesentlichen aus dem genannten Polymer oder der genannten Polymermischung besteht, wobei übliche Additive, Füllstoffe etc. in den jeweils bekannten Mengen und in einem nebengeordneten Anteil von bis zu 30 Gew.-%, in der Regel nicht mehr als 20 Gew.-% und insbesondere nicht mehr als 10 Gew.-%.andere Polymere zugesetzt sein können. Im Speziellen sind (abgesehen von z.B. herstellungsbedingten Verunreinigungen) gar keine anderen Polymere enthalten.

Soweit nichts anderes angegeben ist, umfasst der Begriff Polymer Homo- und Copolymere sowie Mischungen aus zwei oder mehr Polymeren. In der Regel weisen Polymere eine Molmasse von mindestens 10.000, typischerweise von einigen 10.000 bis einigen 100.000 g/mol auf. Bei Copolymeren kann es sich z.B. um statistische, alternierende, Block- sowie Pfropfcolpolymere handeln.

Typische Polypropylene für die Hauptschicht sind solche mit MFI-Werten im Bereich von 1 bis 12 g/10min bei 230°C. Typische Vertreter sind zum Beispiel RD 204 CF, RD 208 CF, SD 233 CF (Borealis) oder 525 P (Sabic). Es kann sich um Homopolymere oder um Copolymere handeln, vorzugsweise um Copolymere. Die Copolymere des Polypropylen enthalten vorzugsweise alpha Olefine als Comonomere wie z.B. Ethylen, 1-Buten, 1-Penten, 4-Methyl-1-Penten, 1-Hexen, 1-Hepten oder 1-Octen, oder eine Mischung davon. Die Gehalte an Comonomeren können im Fall von Ethylen im Bereich von 0,2 % bis 12 %, im Fall von 1-Buten 0,2 % bis 15 % und 1-Octen 0,2 % bis 40 % betragen.

Eine erhöhte Durchstoßfestigkeit kann außerdem durch den Zusatz von Ultra-Low-Density-Polyethylen (ULDPE), Linear-Low-Density-Polyethylen (LLDPE) oder Styrol-Butadien-Styrolpolymere (SBS), Styrol-Isopren-Styrolpoylmere (SIS), Styrol-Ethylen-Butylen-Styrolpolymere (SEBS) und/oder Styrol-Ethylen-Propylen-Styrolpolymere (SEPS) erreicht werden. In der Regel werden von diesen Polymeren Mengen zwischen 10 und 40 Gew.-% eingesetzt. Bespielsweise eignen sich die Kraton-Typen G1643, G1654 G1657, G1726. Als ULDPE oder LLDPE können von Dow Chemicals die Typen Dowlex SC2107, SC2108 oder Attana 4606, 4607 eingesetzt werden.

Die Peelschicht besteht aus 20 bis 70 Gew.-% Polypropylen und 30 bis 80 Gew.-% polyolefinischen Plastomer mit einer Dichte von 0,85 bis 0,89 g/cm³ sowie ggfs. bis zu 10 % Verarbeitungshilfsstoffen und Additiven wie Antioxidantien, UV-Stabilisatoren, UV-Absorbern, Gleitmitteln, Antiblockmittel und ähnlichen.

Unter dem Begriff polyolefinisches Plastomer sind insbesondere Ethylen alpha Olefin Copolymere zu verstehen, die ein oder mehrere alpha Olefin Comonomere enthalten. Typische Comonomere sind alpha Olefine mit 4 bis 8 C-Atomen, vorzugsweise 1-Buten, 1-Hexen oder 1-Octen. Die Dichte der polyolefinischen Plastomere liegt typischerweise im Bereich 0,860 g/cm³ bis 0,91 g/cm³. Der Schmelzindex kann zwischen 0,5 und 30 g/10 min bei 190°C liegen. Die Herstellung solcher Polymere ist z.B. in den Patenten EP 0461815, US 5278236, EP 0273654 beschrieben. Typische Vertreter sind zum Beispiel: Affinity EG 8200 (Dow Chemicals, D = 0,873 g/cm³, MFI = 4,5 g/10min, 190°C/2,16 kg), Affinity EG 8150 (Dow Chemicals, D = 0,868 g/cm³, MFI = 0,5 g/10min, 190°C/2,16 kg), Affinity EG 8400 (Dow Chemicals, D = 0,87 g/cm³, MFI = 30 g/10min, 190°C/2,16 kg), Exact 4049 (Exxon, D = 0,873 g/cm³, MFI = 4,5 g/10min, 190°C/2,16 kg), Exact 8210 (Exxon, D = 0,882 g/cm³, MFI = 10 g/10min, 190°C/2,16 kg), Versify 3401 (Dow Chemicals, D = 0,863 g/cm³, MFI = 8 g/10min, 230°C/2,16 kg), Versify 3300 (Dow Chemicals, D = 0,866 g/cm³, MFI = 8 g/10min, 230°C/2,16 kg).

Für die Peelschicht sind jedoch keine polaren Polymere wie Ethylenvinylacetat (EVA), Ethylenethylacrylat (EEA) usw. oder mineralische Füllstoffe in größeren Mengen als 5 % notwendig. Vorzugsweise sind weniger als 1 % polare Polymere und/oder weniger als 1 % mineralische Füllstoffe enthalten, insbesondere gar keine polaren Polymere oder mineralische Füllstoffe. Weiterhin sind vorzugsweise keine Haftverbesserer enthalten.

Eine optionale hitzebeständige Deckschicht basiert auf einem Homo-Polypropylen, nukleiertem Homo-Polypropylen oder einem Block-Copolymer, das ebenfalls nukleiert sein kann. Der DSC-Schmelzpunkt sollte über 150 °C liegen. Die Messung erfolgt nach DIN ISO 3146.

Eine weiteres Kriterium der Erfindung ist, dass der Folienverbund eine gute Transparenz aufweist, d.h. bei einer 100 µm dicken Folie beträgt der Hazewert gemessen nach ASTM D1003 maximal 30 %, vorzugsweise maximal 20 %.

Eine weitere Eigenschaft ist, dass zwischen den einzelnen Schichten der erfindungsgemäßen Folie eine so hohe Bindungskraft besteht, dass es während des Peelvorgangs dieser Oberfolie von einem Substrat zu keiner Lagentrennung zwischen den Schichten der Oberfolie kommt.

Weiter ist die Zusammensetzung der Peelschicht so formuliert, dass bei einer Schweißtemperatur von unter 130 °C ein Peelverbund hergestellt werden kann, der während der Sterilisation und bei dem Gebrauch der Verpackung eine sichere Verbindung der Oberfolie mit dem Substrat garantiert.

Der Verbund aus der Oberfolie und dem Substrat wird mittels Hitze und Druck hergestellt. Die Zusammensetzung der Peelschicht erlaubt erfindungsgemäß ein Siegelfenster von wenigstens 10 °C bei dem eine Peelkraft, unabhängig von dem eingesetzten Substrat, von 0,8 bis 3 N/cm, vorzugsweise von 1 bis 2,8 N/cm erreicht wird.

Die erfindungsgemäße Folie kann in allen Schichten mit Antioxidantien, UV-Stabilisatoren, UV-Absorbern, Gleitmitteln, Antiblockmittel oder anderen Additiven und Extrusionshilfsstoffen ausgerüstet sein. Vorzugsweise sind jedoch kein Additive enthalten.

Der Verbund aus erfindungsgemäßer Folie und Substrat kann mittels gängigen Sterilisationsmethoden, wie z.B. Gamma-Bestrahlung, Elektronstrahl-Verfahren, Plasmasterilisation, Dampfsterilisation bei 121°C oder Begasung, z.B. mit Ethylenoxid sterilisiert werden.

Die Besonderheit der Erfindung liegt in der Kombination von Rohstoffen. Zum einen geht ein Teil der Formulierung der Peelschicht mit dem Substrat bei den Siegelbedingungen eine Bindung ein. Ein anderer Teil der Formulierung ist für die Haftung zu der Hauptschicht verantwortlich, stellt aber gleichzeitig eine Störstelle bei der Haftung zu dem Substrat dar. Unter den Siegelbedingungen wird von dieser Komponente keine Haftung zu dem Material des Substrates erreicht. Ein besonderes Augenmerk war hier, dass keine anorganischen Additive eingesetzt werden, die die guten optischen Eigenschaften negativ beeinflussen. Es kann eine hoch transparente Folie hergestellt werden, so dass das verpackte Gut ohne Beeinträchtigung klar erkannt werden kann. Durch die richtige Auswahl des Polypropylens kann schon bei geringen Foliendicken eine genügend steife Folie hergestellt werden, ohne dass, wie bei anderen Folien, hochsteife PET oder PA-Schichten verwendet werden müssen.

Die Komponente, die in der Peelschicht für die Haftung zu den Materialien der Substrate verantwortlich ist, ist ein Polyolefin-Plastomer oder Polyolefin-Elastomer mit einer Dichte von 0,85 g/cm³ bis 0,89 g/cm³. Der Schmelzindex gemessen nach ISO 1133 kann zwischen 0,5 und 30 g/10min (190°C/2,16 kg) liegen.

Die Polypropylenkomponente in der Peelschicht zeichnet sich dadurch aus, dass sie vorzugsweise einen Schmelzpunkt im Bereich von 100 bis 150 °C hat. Der Schmelzindex kann im Bereich von 0,5 bis 20 g/10min (230°C/2,16 kg) liegen. Als Polypropylen können insbesondere Copolymere von Propylen und Ethylen oder Propylen mit Ethylen und Buten eingesetzt werden, wobei der Comonomer-Anteil vorzugsweise 2 Gew.-% oder mehr beträgt.

Typische Vertreter sind Adsyl 5Q39F (Lyondellbasell, MFI = 0,9 g/10min, 230°C/2,16 kg), Adsyl 5C30F (Lyondellbasell, MFI = 5,5 g/10min, 230°C/2,16 kg), Adflex X 100 G (Lyondellbasell, MFI = 8,0 g/10min, 230°C/2,16 kg), , Adflex Q 100 F (Lyondellbasell, MFI = 0,8 g/10min, 230°C/2,16 kg), Hifax CA 138 A (Lyondellbasell, MFI = 2,8 g/10min, 230°C/2,16 kg), RE 809 CF (Borealis, MFI = 6,0 g/10min, 230°C/2,16 kg), TD 218 CF (Borealis, MFI = 6,0 g/10min, 230°C/2,16 kg), TD 109 CF (Borealis, MFI = 6,0 g/10min, 230°C/2,16 kg), RD 204 CF (Borealis, MFI = 8,0 g/10min, 230°C/2,16 kg).

Bei der im Stand der Technik vorgeschlagenen Verwendung von Polyethylen aus der Gruppe der LLDPE (linear low density polyethylen) mit einer Dichte von 0,90 bis 0,935 g/cm³ oder LDPE (low density polyethylen) mit einer Dichte von 0,915 bis 0,935 g/cm³ zusammen mit einem Polypropylen kommt es zu mangelhaften Peeleigenschaften. Typische Vertreter aus dem Bereich LLDPE sind : Attane 4607G (Dow Chemicals, D = 0,904 g/cm3, MFI = 4 g/10min, 190°C/2,16 kg), Attane 4101 G (Dow Chemicals, D = 0,912 g/cm3, MFI = 1 g/10min, 190°C/2,16 kg), Attane 2045G (Dow Chemicals, D = 0,92 g/cm3, MFI = 1 g/10min, 190°C/2,16 kg), Dowlex SC2107 G (Dow Chemicals, D = 0,917 g/cm3, MFI = 2,3 g/10min, 190°C/2,16 kg), Dowlex SC2108 G (Dow Chemicals, D = 0,935 g/cm3, MFI = 2,5 g/10min, 190°C/2,16 kg). Typische Vertreter aus dem Bereich der LDPE sind: 320 E (Dow Chemicals, D = 0,925 g/cm3, MFI = 1 g/10min, 190°C/2,16 kg), 525 E (Dow Chemicals, D = 0,932 g/cm3, MFI = 3,2 g/10min, 190°C/2,16 kg). Bei der Mischung LDPE mit PP kann es bei dem Peelvorgang zu einer Delamination zwischen der Peelschicht und der Hauptschicht kommen. Mischungen die von 30% bis 80% LLDPE mit einer Dichte oberhalb von 0,9 g/cm³ und/oder LDPE mit 20% bis 80% PP enthalten, ergaben entweder keinen Haftverbund oder die Haftkraft stieg innerhalb von 5°C Temperaturerhöhung der Schweißwerkzeuge so stark an, dass man nicht mehr von einer Peelkraft reden kann. Es wurde vielmehr eine Festverschweißung erreicht, d.h. bei der Trennung vom Substrat wurden deutlich Fasern ausgerissen.

Völlig überraschend ist, dass mit der erfindungsgemäße Kombination aus Polyolefinen sehr gute Peelergebnisse für Papier und synthetisches Papier erreicht werden können, obwohl die chemische Natur dieser beiden Substrate vollkommen unterschiedlich ist. Die Peelkräfte sind dabei so, dass die Oberfolie von dem Substrat ohne Ausriss von Fasern gepeelt werden kann. Die Zusammensetzungen der einzelnen Schichten ergeben eine sehr gute klare Folie. Es werden Haze-Werte von kleiner 20 % bei einer 100 µm Folie erreicht.

Durch die in einer bevorzugten Ausgestaltung vorhandene Deckschicht auf Basis eines hoch schmelzenden Polypropylens ist u.a. der thermische Schutz vor einem Ankleben der Folie gegen das Siegelwerkzeug gegeben. Polypropylene, vorzugsweise Homopolymere, für diesen Einsatz weisen eine DSC-Schmelztemperatur von mindestens 150 °C auf. Typische Beispiele sind HD 601 CF (Borealis, MFI = 8,0 g/10min, 230°C/2,16 kg), PP 527 K (Sabic, MFI = 3,0 g/10min, 230°C/2,16 kg), PP 500 P (Sabic, MFI = 3,1 g/10min, 230°C/2,16 kg), BC 918 CF (Borealis, MFi = 3,0 g/10min, 230°C/2,16 kg), HD 905 CF (Borealis, MFI = 6,5 g/10min, 230°C/2,16 kg).

Folgende Schichtdicken haben sich als besonders geeignet erwiesen: Peelschicht 5 bis 30 µm, Hauptschicht 30 bis 300 µm, Deckschicht, soweit vorhanden, 5 bis 30 µm.

Die genannten Schichten können auch aus mehreren Einzelschichten aufgebaut sein. Um bestimmte weitere Funktionen der Folie einstellen zu können, ist es denkbar, dass der Aufbau aus mehreren Hauptschichten und/oder Deckschichten besteht.

Alle Schichten der Folie können mit Prozesshilfsmitteln und Additiven versehen werden. Zum Beispiel werden Antioxidantien, Gleitmittel, Antiblockmittel, UV-Stabilisatoren oder UV-Absorber hinzugesetzt. Die Obergrenze der Zusatzmenge dieser Additive liegt bei jeweils 7 Gew.-%, vorzugsweise jeweils 5 Gew.-%.

Die Erfindung soll anhand der folgenden Beispiele und Figuren näher veranschaulicht werden, ohne jedoch auf die speziell beschriebenen Ausführungsformen beschränkt zu sein. Soweit nichts anderes angegeben ist, beziehen sich sämtliche Angaben von Teilen oder Prozent auf das Gewicht, im Zweifel auf das Gesamtgewicht der Zusammensetzung.

Figur 1 zeigt schematisch den Aufbau des Peel-Verbundes mit dem gasdurchlässigen Substrat und der erfindungsgemäßen Polyolefinfolie.

Figuren 2 a bis c zeigen Ergebnisse einer Peelkraftmessung an verschiedenen Verbunden in Abhängigkeit von der Schweißtemperatur.

Figur 3 zeigt Ergebnisse einer Peelkraftmessung an einem Verbund mit einer erfindungsgemäßen Folie.

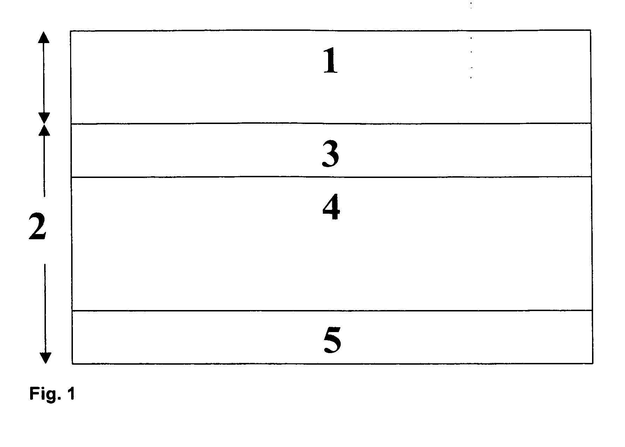

Figur 1 zeigt schematisch einen Verbund aus erfindungsgemäßer Oberfolie 2 und Substrat 1. Die Oberfolie umfasst eine Peelschicht 3, eine Hauptschicht 4 und eine Deckschicht 5.

### Beispiel

Mit den in Tabelle 1 angegebenen Rezepturen wurden Oberfolien hergestellt. Zum Vergleich wurden Oberfolien mit LLDPE (PPL2) mit Dichten größer 0,9 g/cm³ und LDPE (PPL3) hergestellt. Folgende Polymere wurden eingesetzt:
- PP1:: Polypropylen (Copolymer mit Schmelzpunkt 100 bis 150 °C)
- PP2:: Polypropylen (Homopolymer mit Schmelzpunkt von mindestens 150 °C)
- PP3:: Polypropylen (Copolymer mit Schmelzpunkt 100 bis 150 °C)
- PPL1:: Polyolefin-Plastomer mit Dichte 0,85 bis 0,89 g/cm³,

Als Substrate wurden folgende Unterfolien verwendet: Synthetisches Papier Tyvek® 1073B (DuPont, Bezeichnung SUB1), Medizinisches Papier MM 60-1 (Vereinigte Papierwerke Feuchtwangen, Bezeichnung SUB2), Ovantex® F35 (Oliver, Bezeichnung SUB3), und beschichtetes synthetisches Papier CR27 - Tyvek® 1073B (PerfecSeal, Bezeichnung SUB4).

**Tabelle 1: Rezepturzusammensetzungen der Verbunde**

| Verbund | Unterfolie | Peelschicht | Hauptschicht | Deckschicht |
|---|---|---|---|---|
| POF01 | SUB 1 | 70 Gew.-Teile PPL1 | PP3 | PP2 |
| | | 30 Gew.-Teile PP1 | | |
| POF02 | SUB 1 | 60 Gew.-Teile PPL1 | PP3 | PP2 |
| | | 40 Gew.-Teile PP1 | | |
| POF03 | SUB 1 | 50 Gew.-Teile PPL1 | PP3 | PP2 |
| | | 50 Gew.-Teile PP1 | | |
| POF04 | SUB 1 | 40 Gew.-Teile PPL1 | PP3 | PP2 |
| | | 60 Gew.-Teile PP1 | | |
| POF05 | SUB 1 | 60 Gew.-Teile PPL1 | PP3 | PP2 |
| | | 40 Gew.-Teile PP2 | | |
| POF06 | SUB 1 | 60 Gew.-Teile PPL2 | PP3 | PP2 |
| | | 40 Gew.-Teile PP1 | | |
| POF07 | SUB 1 | 60 Gew.-Teile PPL3 | PP3 | PP2 |
| | | 40 Gew.-Teile PP1 | | |
| POF08 | SUB 2 | 60 Gew.-Teile PPL1 | PP3 | PP2 |
| | | 40 Gew.-Teile PP1 | | |
| POF09 | SUB 3 | 60 Gew.-Teile PPL1 | PP3 | PP2 |
| | | 40 Gew.-Teile PP1 | | |
| POF10 | SUB 4 | 60 Gew.-Teile PPL1 | PP3 | PP2 |
| | | 40 Gew.-Teile PP1 | | |
| POF11 | SUB 1 | 100 Gew.-Teile PP1 | PP3 | PP2 |
| POF12 | SUB 1 | 30 Gew.-Teile PPL1 | PP3 | PP2 |
| | | 30 Gew.-Teile PPL2 | | |
| | | 40 Gew.-Teile PP1 | | |
| POF13 | SUB 1 | 30 Gew.-Teile PPL1 | PP3 | PP2 |
| | | 30 Gew.-Teile PPL3 | | |
| | | 40 Gew.-Teile PP1 | | |

Die Ober- und Unterfolien wurden auf einem Brugger HSG-C Schweißgerät miteinander verschweißt. Der Druck an den Siegelbacken betrug 980 N. Die Siegelbacke unten bestand aus einer Stahlplatte, die mit einem geriffelten Kunststoff Härte 70 Shore A beschichtet ist. Die Siegelbacke oben bestand aus Edelstahl. Die Siegelfläche betrug 0,5 * 10 cm. Die Siegelzeit betrug 2 Sekunden. Die untere Siegelbacke wurde nicht beheizt. Die obere Siegelback war beheizt.

Die Peelwerte wurden 24 Stunden nach Schweißung ermittelt. Zur Messung der Peelkraft wurden die Enden der verschweißten Folienstücke in Spannvorrichtung eingeklemmt und die Oberfolie von der Unterfolie in einem Winkel von 180° auseinandergezogen. Die Geschwindigkeit betrug 100 mm/min. Die über einen Messweg von 10 cm gemittelten Messwerte ergaben die Peelkraft. Die angegebenen Werte wurden auf eine Siegelbreite von 1 cm umgerechnet.

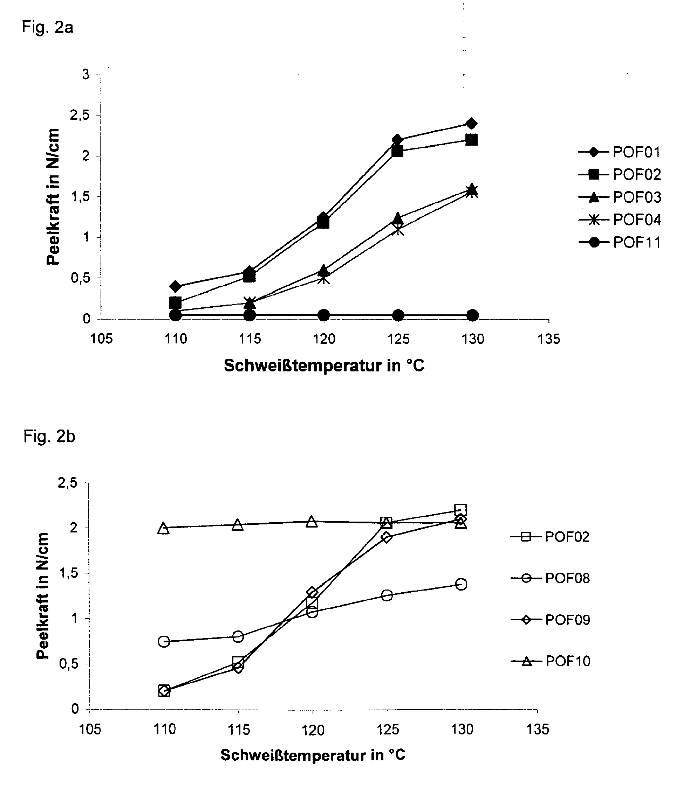

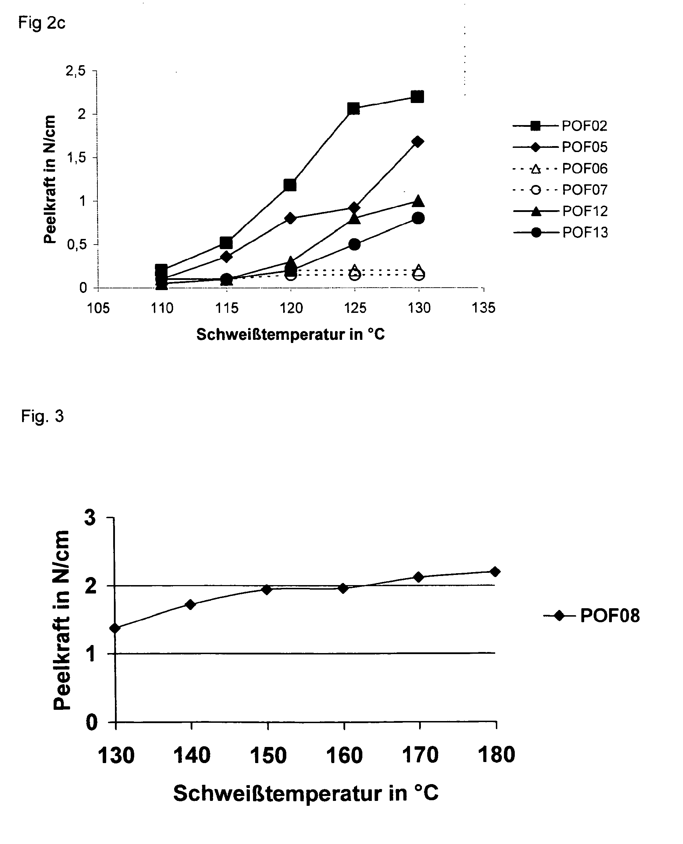

In den Figuren 2 und 3 sind die Ergebnisse der Peelkraftmessungen veranschaulicht. Die Figuren zeigen ganz deutlich, dass nur die erfindungsgemäßen Folien die gewünschten Peelkräfte auch über einen größeren Schweißtemperaturbereich gewährleisten. Je nach Zusammensetzung ist ein überraschend unterschiedliches und nicht vorhersehbares Peelverhalten zu beobachten.

In Figur 2a werden verschiedene Anteile Plastomer in der Oberfolie verglichen. Es ist erkennbar, dass alle erfindungsgemäßen Folien mit Plastomergehalt brauchbar sind, während eine Oberfolie aus Polypropylen ohne Plastomer keinen Verbund ergibt.

Figur 2b vergleicht das Verhalten einer erfindungsgemäßen Folie bei verschiedenen Substraten und zeigt, dass die gewünschten Peelkräfte bei allen Substraten erreicht werden.

In Figur 2c werden verschiedene Zusammensetzungen der Oberfolie verglichen. Die erfindungsgemäßen Folien ergeben alle die gewünschte peelbare Verbindung, während Folien mit LLDPE zu hoher Dichte oder LDPE keine ausreichende Verbindung mit dem Substrat ermöglichen.

In Figur 3 sieht man schließlich, dass die gewünschten Peelkräfte über einen sehr weiten Schweißtemperaturbereich von 50 °C erreicht werden. Damit gewährleistet die erfindungsgemäße Folie eine sichere Prozessführung, eine exakte Kontrolle der Schweißtemperatur auf wenige Grad Celsius, wie bei vielen bekannten Folien nötig, ist entbehrlich.

### Bezugszeichenliste

- 1: Substrat
- 2: Oberfolie
- 3: Peelschicht
- 4: Hauptschicht
- 5: Deckschicht

## Patentansprüche

1. Mehrschichtige Folie zur Herstellung von Verpackungen mittels Verschweißen mit einem Substrat aus beschichtetem oder unbeschichtetem Papier oder synthetischem Papier
**dadurch gekennzeichnet, dass**
die Folie eine Hauptschicht (4) aus Polypropylen und eine Peelschicht (3) enthaltend 30 bis 80 Gew.-% eines Polyolefin Plastomer mit einer Dichte von 0,85 bis 0,89 g/cm³ und 20 bis 70 Gew.-% eines Polypropylen mit einem DSC Schmelzpunkt zwischen 100 und 150 °C umfasst.

2. Folie gemäß Anspruch 1, **dadurch gekennzeichnet, dass** die Peelschicht frei ist von mineralischen Füllstoffen in Anteilen von mehr als 5 Gew.-% und/oder von polaren Polymeren.

3. Folie gemäß Anspruch 1 oder 2, **dadurch gekennzeichnet, dass** die Hauptschicht (4) zu mindestens 70 Gew.-% eines Polypropylen oder einer Mischung von Propylen Copolymeren und/oder heterophasischen Copolymeren des Propylen und/oder Homopolymeren des Propylen enthält.

4. Folie gemäß einem der Ansprüche 1 bis 3, **dadurch gekennzeichnet, dass** die Hauptschicht (4) einen Modifikator ausgewählt unter Styrol-Butadien-Styrolpolymere (SBS), Styrol-Isopren-Styrolpoylmere (SIS), Styrol-Ethylen-Butylen-Styrolpolymere (SEBS) und/oder Styrol-Ethylen-Propylen-Styrolpolymere (SEPS) enthält.

5. Folie gemäß einem der Ansprüche 1 bis 4, **dadurch gekennzeichnet, dass** die Folie (2) eine Deckschicht (5) ausgewählt unter Propylenhomopolymer, heterophasischem Polypropylen und Gemischen davon enthält, wobei die Polypropylene nukleiert sein können.

6. Folie gemäß einem der Ansprüche 1 bis 5, **dadurch gekennzeichnet, dass** sie bei einer Dicke von 100 µm einen Hazewert von maximal 20 % aufweist.

7. Folie gemäß einem der Ansprüche 1 bis 6, **dadurch gekennzeichnet, dass** die Peelkraft nach dem Verschweißen mit dem Substrat (1) durch Hitze und Druck bei einer maximalen Schweißtemperatur von 130 °C im Bereich von 0,8 N/cm bis 3 N/cm, vorzugsweise von 1 bis 2,8 N/cm liegt.

8. Verbund umfassend eine Folie gemäß einem der Ansprüche 1 bis 7, die mit einem Substrat aus beschichtetem oder unbeschichtetem Papier oder synthetischem Papier verschweißt ist.

9. Verbund gemäß Anspruch 8, **dadurch gekennzeichnet, dass** die Schweißtemperatur einer Siegelbacke zum Herstellen des Verbunds zwischen 110°C und 135°C liegt.

10. Verbund gemäß Anspruch 8 oder 9, **dadurch gekennzeichnet, dass** er mittels Gamma-Bestrahlung, Elektronstrahl-Verfahren, Plasmasterilisation, Dampfsterilisation bei 121 °C oder Begasung sterilisierbar ist.

11. Verbund gemäß Anspruch 8, 9 oder 10, **dadurch gekennzeichnet, dass** er ein Siegelfenster von wenigstens 10 °C aufweist, bei dem eine Peelkraft, unabhängig von dem eingesetzten Substrat, im Bereich von 0,8 N/cm bis 3 N/cm, vorzugsweise von 1 bis 2,8 N/cm, erhalten wird.

12. Verwendung eines Verbundes gemäß einem der Ansprüche 8 bis 11 zur Herstellung von sterilisierbaren Verpackungen wie Beuteln, Tiefziehschalen, Taschen.
